# EUROPEAN PATENT SPECIFICATION

(11) **EP 1 580 978 B1**
(45) Date of publication and mention of the grant of the patent: **13.10.2010**
(21) Application number: 05006156.3
(22) Date of filing: 21.03.2005
(51) Int. Cl.: H04N 1/21

(54) **Apparatus, method and program for generating images**
Verfahren und Vorrichtung zur Bilderzeugung
Procédé et dispositif de génération d'images

(30) Priority: 22.03.2004 JP 2004082669; 18.02.2005 JP 2005041481
(43) Date of publication of application: 28.09.2005
(73) Proprietor: FUJIFILM Corporation, Minato-ku Tokyo (JP)
(72) Inventor: Habuta, Shizuo, Minato-ku Tokyo (JP); Tsubaki, Hisayoshi, Kasei-machi Ashigarakami-gun Kanagawa-ken (JP); Shirasaka, Hajime, Kasei-machi Ashigarakami-gun Kanagawa-ken (JP)
(74) Representative: Klunker . Schmitt-Nilson . Hirsch

(56) References cited:
- EP-A- 1 335 576
- JP-A- 2001 346 056
- US-A1- 2001 055 126

## Description

### BACKGROUND OF THE INVENTION

### Field of the Invention

The present invention relates to an image generation apparatus and an image generation method for obtaining an image from a medium such as a film, a print, and a memory card and for adding predetermined information to the image. The present invention also relates to a program for causing a computer to execute the image generation method.

### Description of the Related Art

Prints generated from conventional silver-salt photographic films have been used in various manners. For example, such prints and negative films are used for checking how images look, for communication with friends by showing the prints, for sending additional prints to friends, for display of enlargements thereof, and for generating photo albums. However, prints generated from silver-salt photographic films only accumulate if the prints are not set in order. Therefore, using the prints and the films, such as finding a desired one of the prints to generate an additional print, becomes difficult. Especially, in the case where the number of prints becomes large, the prints tend to be left without consideration of photography order, which makes organizing the prints to become more difficult.

Prints can be used easily if arranged in order frequently. However, classification of prints according to time and date of photography or theme is substantially troublesome. Even if prints are set in order in the form of a photo album, no copy of the photo album is usually made. Therefore, enjoying photographs therein is difficult with a large number of people or a person living in a remote place.

If organization of prints is neglected, not only prints but also negative films accumulate. Negative films are in most cases left as they are or stored in bags or boxes without organization thereof. If a user as a photographer ages and the number of family members increases, the number of prints and negative films also increases more and more. Therefore, a large mount of prints and negative films are neglected if no organization is carried out thereon. Prints and negative films are seldom discarded since no additional prints can be made if they are discarded. Consequently, many households are troubled by how to organize and store such prints and films.

Meanwhile, a photograph service system has been proposed in Japanese Unexamined Patent Publications No. 10(1998)-150538 or 10(1998)-150541, for example. In such a system, images recorded on a negative film or prints are read by a reading apparatus such as a scanner for obtaining image data sets. The image data sets are stored in a recording medium such as a CD-R and reproduced by a reproduction apparatus such as a personal computer for appreciation thereof. Furthermore, the image data sets are printed at the request of a user. In addition, a network photograph service system including an image storage system has also been proposed in U.S. patent No . 6, 324, 521, for example. In the network photograph service system, image data sets are sent to and stored in an image storage server via a network such as the Internet, and various kinds of processing regarding the image data sets, such as viewing the image data sets and placing a printing order, can be carried out with use of a terminal remote from the image storage server.

However, in the image storage system described above, images are read from a negative film at the same time as the images are printed after development of the film. Therefore, image data sets are stored collectively for each roll of film. Consequently, relating a user who requested storage of the image data sets to the film roll is a troublesome task. In addition, images are only read from a negative film and stored thereafter. Therefore, a large amount of image data sets are simply stored without being organized if images are read from prints or negative films which are neglected in a household. In this case, a user who accesses the image storage server needs to set the image data sets in order, which is as troublesome as in the case of organization of the prints and the negative films. Therefore, such a system is not convenient.

For this reason, a so-called "photograph mining" service system has been proposed in U.S. Patent Application Publication No. 20030151767, for example. In this system, image data sets are obtained from recording media such as prints and negative films, and related to recording media information representing the recording media from which the image data sets have been obtained. The image data sets related to the recording media information are then stored for each user, based on user information. In this system, if a user only requests image reading from a DPE store although a large amount of prints and negative films neglected in his/her household have not been set in order, the user can view image data sets obtained through the image reading in a state wherein the image data sets are classified according to the recording media information.

In the system described in U.S. Patent Application Publication No. 20030151767, photography date information representing a date of photography is obtained as the recording media information. More specifically, in the case where the date is printed in each of images, the photography date information is obtained by character recognition. In the case where a film can store magnetic information, photography date information in the magnetic information is read and used. Furthermore, a date of photography specified by a user as a requester is used as the photography date information. In the case where the photography date is unknown, the photography date is inferred from a DX code of a film or from a brand mark printed on prints, for example. By using the photography date information as the recording media information, images can be classified and viewed in order of year.

The photography date printed on the images, the photography date specified by the user, and the photography date obtained from the magnetic information are highly reliable, and the images can be classified into years with certainty according to the photography date. However, if the DX code or the brand mark printed on the prints are used, only a rough estimate of the year can be known. Therefore, the photography date information obtained in this manner is not highly reliable, and the images cannot be classified with certainty according to the photography date represented by the photography date information. Therefore, it is convenient to know how reliable the photography date represented by the photography date information is.

### SUMMARY OF THE INVENTION

The present invention has been conceived based on consideration of the above circumstances. An object of the present invention is to cause the reliability of photography date of an image to be apparent.

An image generation apparatus of the present invention comprises:
image acquisition means for obtaining at least one image from a recording medium;
photography date information acquisition means for obtaining photography date information representing date of photography regarding the image or images; and
information addition means for adding the date of photography represented by the photography date information and reliability of the date of photography to the image or images.

The recording medium refers to a medium such as a negative or reversal film or a print enabling recording of the image or images in a visible manner, or to a recording medium such as a memory card, an optical disc, and a magnetic disc enabling recording of the image or images in an electric, optical, or magnetic manner. Furthermore, any recording medium from which the image or images can be read photoelectrically, such as a photo album having prints pasted therein, a certificate of merit and a ticket stub owned by a user, can be used. The recording medium includes a negative film having a plurality of images recorded thereon, a print recording only one image, and a reversal film mounted on a slide.

As the image acquisition means, a scanner such as a print scanner or a film scanner that can obtain the image or images by photoelectrically reading the recording medium can be used, and a media drive of various kinds such as a memory card drive, an optical disc drive, and a magnetic disc drive that can obtain the image or images by electrically or optically or magnetically reading the recording medium. A plurality of the image acquisition means may be used for the recording medium of one type.

Note that the information adding means of the image generation apparatus of the present invention may be that which ranks the reliability of the date of photography of the image or images.

An image generation method of the present invention comprises the steps of:
obtaining at least one image from a recording medium;
obtaining photography date information representing date of photography regarding the image or images; and
adding the date of photography represented by the photography date information and reliability of the date of photography to the image or images.

The image generation method of the present invention may be provided as a program for causing a computer to execute the method. The program of the present invention may be provided being recorded on a computer readable medium. Those who are skilled in the art would know that computer readable media are not limited to any specific type of device, and include, but are not limited to: floppy disks, CD's, RAM's, ROM's, hard disks, magnetic tapes, and internet downloads, in which computer instructions can be stored and/or transmitted. Transmission of the computer instructions through a network or through wireless transmission means is also within the scope of this invention. Additionally, computer instructions include, but are not limited to: source, object and executable code, and can be in any language, including higher level languages, assembly language, and machine language.

According to the present invention, the image or images are obtained from the recording medium and the photography date information representing the date of photography of the image or images is also obtained. The date of photography represented by the photography date information and the reliability thereof are then added to the image or images. Therefore, by referring to the image or images, the photography date and the reliability thereof can be known, and the image or images can be classified by the reliability.

### BRIEF DESCRIPTION OF THE DRAWINGS

Figure 1 is a block diagram showing the configuration of a photo mining system adopting an image generation apparatus of an embodiment of the present invention;
Figure 2 shows a structure of a user information database;
Figure 3 is a block diagram showing the configuration of the image generation apparatus;
Figure 4 shows a structure of a year database;
Figure 5 shows a receipt screen;
Figure 6 shows a main screen;
Figure 7 shows a classification screen;
Figure 8 shows classification information;
Figure 9 shows a structure of an operations management database;
Figure 10 shows a table representing a relationship between a source of photography date information and reliability thereof;
Figure 11 shows a comment input screen;
Figure 12 shows an image confirmation screen;
Figure 13 shows an image obtained by tilting a camera by 90 degrees;
Figure 14 shows how the reliability is described;
Figure 15 is a flow chart showing a procedure carried out when an order for a photo mining service is placed;
Figure 16 is a flow chart showing a procedure carried out at the time of classification in a digitalization center; and
Figure 17 is a flow chart showing a procedure carried out in the digitalization center after the classification.
Figure 18 is a flow chart showing an alternate procedure carried out in the digitalization center after the classification.

### DESCRIPTION OF THE PREFERRED EMBODIMENT

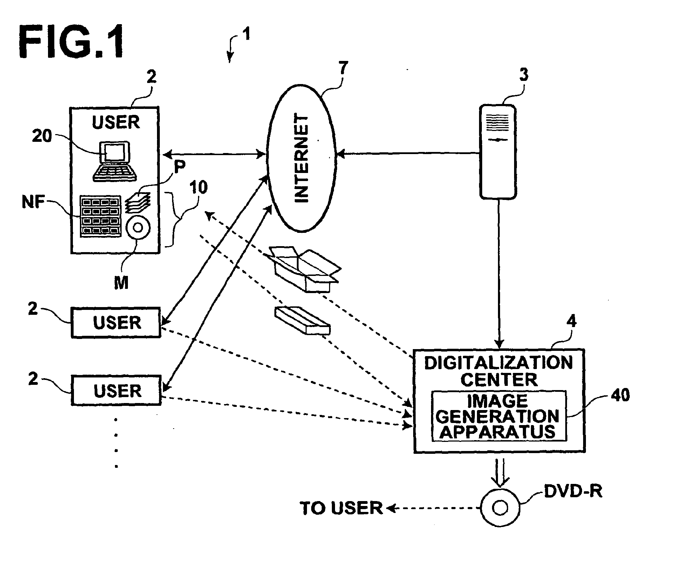

Hereinafter, an embodiment of the present invention will be described with reference to the accompanying drawings. Figure 1 shows the configuration of a photo mining system adopting an image generation apparatus of the embodiment of the present invention. As shown in Figure 1, in a photo mining system 1 in this embodiment, various kinds of information, negative films, prints, and the like are exchanged between users 2, a photo mining server 3 (hereinafter referred to as the PM server 3) that receives an order for a photo mining service placed by any one of the users 2 (hereinafter referred to as the user 2) via the Internet, and a digitalization center 4 that deals with the order.

In this embodiment, the photo mining service is a service for providing the user 2 with a DVD-R storing image data sets S0 obtained from negative films NF, prints P, and recording media M such as a CD-R and a memory card owned by the user 2, and a DVD-Video file enabling a slide show generated from the image data sets S0.

The user 2 owns the unorganized negative films NF and the prints P, and stores a large amount of image data sets in the recording media M. The user 2 places the order for the photo mining service from the PM server 3 regarding the large amount of the negative films NF, the prints P, and the recording media M. More specifically, the user 2 has a user terminal 20 such as a personal computer connected to the Internet 7, and accesses the PM server 3 by using the user terminal 20 for placing the order.

The photo mining system 1 in this embodiment are for members only, and the user 2 has registered himself/herself with the PM server 3 to obtain a user ID and a password for identification. At the time of membership registration, the user 2 registers user information comprising items such as the name, the address, age, a phone number, an e-mail address, and family composition thereof. The user information is stored in a user information database in the PM server 3 and in the digitalization center 4 as will be described later.

The PM server 3 has a Web site for receiving the order for the photo mining service placed by the user 2. The user 2 accesses the Web site of the PM server 3 by using the user terminal 20, and inputs the user ID and the password for placing the order. The PM server 3 issues an order number upon reception of the order, and sends to the user 2 an e-mail message that notifies the user 2 of the order number and date of delivery, for confirmation of order reception. The PM server 3 sends notification of reception of the order to the digitalization center 4, and the notification includes the user information, the order number, the date of delivery, and date of order reception.

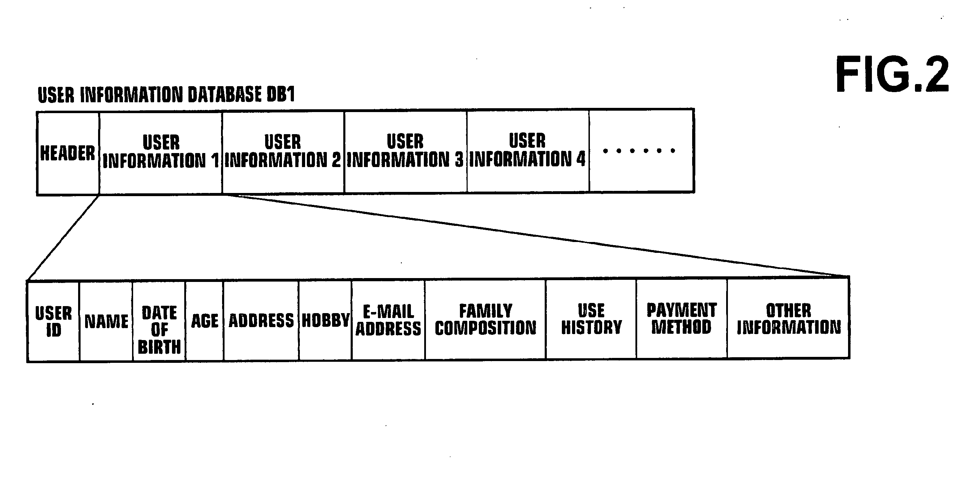

The PM server 3 stores a user information database DB1. Figure 2 shows a structure of the user information database DB1. As shown in Figure 2, the user information database DB1 has a plurality of pieces of the user information and header information for managing the user information. When new user registration is received, the user information database DB1 is updated. The user information includes items such as the user ID, the name, date of birth, age, the address, hobby, the e-mail address, family composition, history of image data use, a method of payment, and other information.

When the notification of order reception is received from the PM server 3, an operator in the digitalization center 4 sends a delivery box B to the address of the user 2 with reference to the user information included in the notification and the user information database DB1 stored in the digitalization center 4 so that the user 2 can send the negative films NF, the prints P, and the recording media M (hereinafter collectively referred to as recording media 10) owned by the user 2 to the digitalization center 4. An order form recorded with the order number and the like of the user 2 is also sent to the user 2, together with the delivery box B. The order form is also pasted on the delivery box B. A bar code corresponding to the order number is printed on the order form. The delivery box B may be sent by a company other than the digitalization center 4.

When the user 2 receives the delivery box B, the user 2 encloses the recording media 10 of his/her own in the delivery box B and sends the delivery box B to the digitalization center 4. At this time, the user describes the type and quantity of the recording media 10 and a comment on the order form, and sends the order form to the digitalization center 4.

When the delivery box B is received, the digitalization center 4 carries out processing for the photo mining service by using an image generation apparatus 40.

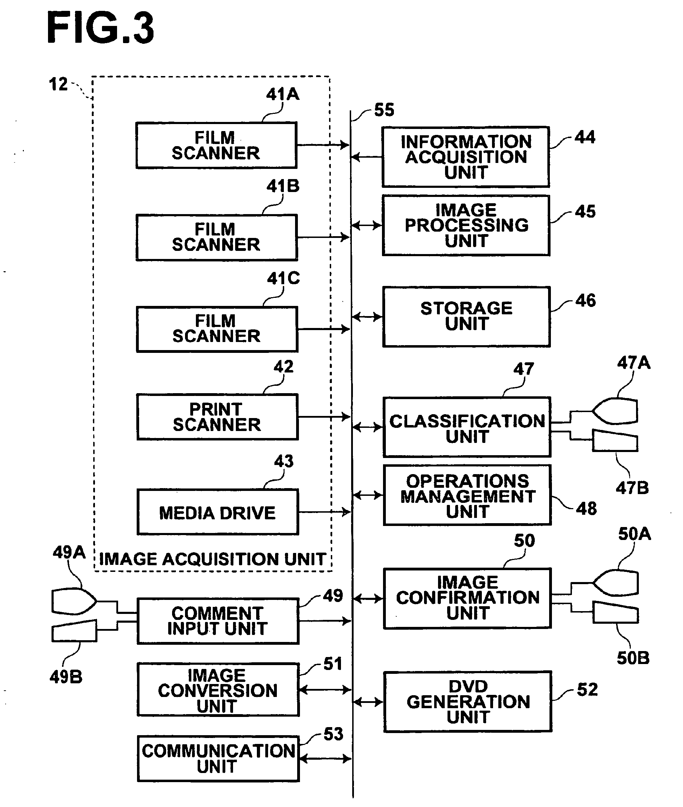

Figure 3 is a block diagram showing the configuration of the image generation apparatus 40. The image generation apparatus 40 obtains the image data sets S0 from the recording media 10, and generates the DVD-R recorded with the image data sets. As shown in Figure 3, the image generation apparatus 40 comprises film scanners 41A~41C for obtaining the image data sets S0 by reading images recorded on the negative films NF, a print scanner 42 for obtaining the image data sets S0 by reading images recorded on the prints P, a media drive 43 for obtaining the image data sets S0 by reading the image data sets S0 from the recording media M, an information acquisition unit 44 that obtains information on a date of photography (hereinafter referred to as the photography date information D) from the negative films NF and the prints P and from the image data sets S0 read from the recording medium M and obtains various kinds of information to be added to the image data sets S0, an image processing unit 45 for obtaining processed image data sets S1 by carrying out image processing and image restoration processing on the image data sets S0, and a storage unit 46 for storing various kinds of information including the image data sets S1.

The image generation apparatus 40 further comprises a classification unit 47 for assigning any one of the film scanners 41A~41C, the print scanner 42, or the media drive 43 (hereinafter collectively referred to as an image acquisition unit 12) to obtain the image data sets S0 from the recording media 10 sent by the user 2, an operations management unit 48 for managing the type of the image acquisition unit 12 used for obtaining the image data sets S0 from the recording media 10 for each of processes of acquisition (hereinafter referred to as a job), a comment input unit 49 for receiving input of a comment on the images for each of the jobs or for each of the images, an image confirmation unit 50 for confirming and correcting the images represented by the processed image data sets S1, an image conversion unit 51 for converting the image data sets S1 into image data sets S2 of Exif format by adding various kinds of information such as the comment to the image data sets S1, a DVD generation unit 52 for generating a DVD-Video file V0 in the form of slide show from the image data sets S2 and for generating the DVD-R recorded with the image data sets S2 and the DVD-Video file V0, and a communication unit 53 for communicating with the PM server 3.

The components in the image generation apparatus 40 are connected by a bus 55.

Each of the film scanners 41A~41C sequentially reads the images recorded on the negative films NF, and obtains the image data sets S0 representing the images. The negative films NF are sent to the digitalization center 4 in the form of being cut into pieces of 6 frames each and stored in film storage sheets. Therefore, an operator of the film scanners 41A~41C takes out the pieces from the sheets and places the pieces on the film scanners for reading the images.

In this embodiment, image reading from the negative films NF contained in one of the film storage sheets corresponds to one of the jobs. Therefore, the operator of the film scanners 41A~41C inputs information representing completion of the job by using an operation unit thereof whenever image reading from one of the film storage sheets is completed.

A film roll may be generated from the negative films NF stored in the film storage sheets by joining the films together so that any one of the scanners 41A~41C can carry out the image reading from the film roll.

The print scanner 42 obtains the image data sets S0 representing the images on the prints P by reading the prints P. The prints P are sent to the digitalization center 4 by being bound together. Therefore, an operator of the print scanner 42 places each of the prints P on the scanner 42, and carries out image reading. In this embodiment, image reading from the bundle of the prints P corresponds to one of the jobs. Therefore, the operator of the print scanner 42 inputs information representing completion of the job by using an operation unit thereof whenever image reading from the bundle is completed.

The print scanner 42 may have sorting means for automatically feeding the prints P so that the image reading from the prints P can be carried out automatically.

The media drive 43 obtains the image data sets S0 by reading the image data sets S0 from the recording media M. Since the type of the recording media M varies, the media drive 43 of the type corresponding to the recording media M available on the market is used.

In this embodiment, reading of the image data sets S0 from one of the recording media M corresponds to one of the jobs. Therefore, an operator of the media drive 43 inputs information representing completion of the job by using an operation unit thereof whenever the image reading from the corresponding recording medium M is completed.

The information acquisition unit 44 obtains the photography date information D from the negative films NF, the prints P, and the like. Each of the negative films NF is recorded with a code number specific thereto (hereinafter referred to as a DX code). By referring to the DX code, the year in which the film was produced can be inferred. Therefore, the information acquisition unit 44 reads the DX code recorded on each of the negative films NF, and obtains the photography date information D representing the year of production of the corresponding negative film NF by referring to a year database DB2 stored in the storage unit 46 as will be described later.

In the case where the negative films NF includes so-called APS films each having a magnetic coating for recording magnetic information, the date of photography can be recorded in the magnetic coating as magnetic information. In this case, the photography date information D can be obtained by reading the magnetic information representing the date of photography recorded in the magnetic coating thereof.

In the case where the date is printed in each of the images, the date is read and character recognition is carried out thereon to obtain the photography date. In this case, information obtained by reading the date printed in each of the images can be used as the photography date information D. In some cases, the date is hard to read, depending on the images. In such a case, the photography date information D of the images whose photography date was not readable may be obtained based on the date of photography readable from the images arranged immediately before and after the image in a sequence of image reading.

For the prints P, the date of photography is known by reading the date printed in each of the prints P and carrying out character recognition thereon if the date is printed on each of the prints P. In this case, information obtained by reading the date in each of the prints P can be used as the photography date information D.

In the case where some of the prints P have a white margin, information representing the year in which the corresponding prints P were printed, such as "Fujicolor 99", may be present therein. Furthermore, the information representing the year (such as a brand mark varying from year to year) may be printed on the rear side of the prints P. In such a case, information obtained by reading the margin or the rear side and carrying out character recognition thereon may be used as the photography date information D.

In some cases, the user 2 has written the date of photography on the film storage sheets, a bag containing the sheets, and/or on the rear side of the prints P. Furthermore, the user 2 may have written the date of photography on the order form for each of the recording media 10. In such a case, the comment input unit 49 or the like may receive input of the date from the operator in the digitalization center 4, and the date is used as the photography date information D.

For the image data sets S0 read from the recording media M, the photography date information is described in a tag of each of the image data sets S0. Therefore, the photography date information D is obtained based on the information described in the tag.

As has been described above, the photography date information D can be obtained from the various sources such as the DX code, the date printed in each of the images, the date specified by the user 2, the information recorded on the margin or rear side of the prints P, and the information in the tag. Therefore, priority of the sources is preferably determined so that the photography date information D can be obtained according to the priority. At this time, it is preferable for the sources to be recognizable. Alternatively, the photography date information D may be obtained in relation to each of the sources available, without determination of the priority in advance.

In addition to the photography date information D, the information acquisition unit 44 obtains the various kinds of information such as a frame number in the case of reading the negative films NF, and the type of the recording media 10 (either the negative films NF, the prints P, or the recording media M) from which the image data sets S0 were obtained, and generates information J in addition to the photography date information D. The information J includes information on the source of the photography date information D (such as the DX code, the printed date, the brand mark, the information from the margin, the information on the year, or the tag).

The photography date information D obtained by the information acquisition unit 44 may be obtained at the same time as acquisition of the image data sets S0 by the image acquisition unit 12. In this case, the information acquisition unit 44 is installed together with the image acquisition unit 12 and an operator of the image acquisition unit 12 operates the information acquisition unit 44.

The image processing unit 45 obtains the processed image data sets S1 by carrying out the image processing for improving image quality (such as gradation processing, color conversion processing, and sharpness processing) on the image data sets S0. Some of the negative films NF and the prints P of the user 2 requesting the photo mining service may have faded sepia tones or scars generated in long term storage thereof. Furthermore, some of the images generated by using flash may have red eyes printed therein.

For this reason, the image processing unit 45 may carry out the image restoration processing such as faded color correction processing for correcting the sepia tones into normal colors, and scar removal processing and red eye correction processing on the image data sets S0. The image restoration processing may be carried out automatically by analyzing the image data sets S0. However, the user 2 may wish to store the images as they are. Therefore, the image restoration processing may be carried out only in the case where the user 2 instructs to do so. Furthermore, the image restoration processing may be carried out on all the image data sets S0 according to an instruction from the user 2. This instruction is described in the order form by the user 2. Therefore, the operator in the digitalization center 4 can judge whether or not the image restoration processing needs to be carried out by confirming presence or absence of the instruction from the user 2 in the order form.

At the time of the image reading by any one of the film scanners 41A~41C, an infrared ray may be irradiated on the films for obtaining IR data sets corresponding to the image data sets S0 by reading a transmitted ray. Based on the IR data sets, the scar removal processing can be carried out. More specifically, the IR data sets obtained by irradiation of the infrared ray on the films represent where and how the image data sets are deficient due to a scar or dust on the films. If the scar removal processing is carried out through acquisition of the IR data sets, scar removal can be carried out efficiently.

The storage unit 46 comprises a large-capacity hard disc, and temporarily stores the processed image data sets S1 as well as the image data sets S0 obtained by the film scanners 41A~41C, the print scanner 42, and the media drive 43. At the same time, the storage unit 46 stores the user information database DB1 and the year database DB2 representing a relationship between the DX code and the year of production of the films and a relationship between the brand marks of the prints and the year of use of the brand mark. The storage unit 46 also stores the operations management database DB3 in which the order number, classification information which will be described later, file names of the image data sets S0, the photography date information D, the comment, the frame numbers in the negative films NF, and an aspect ratio of the images are registered, for each of the users 2 and for each order.

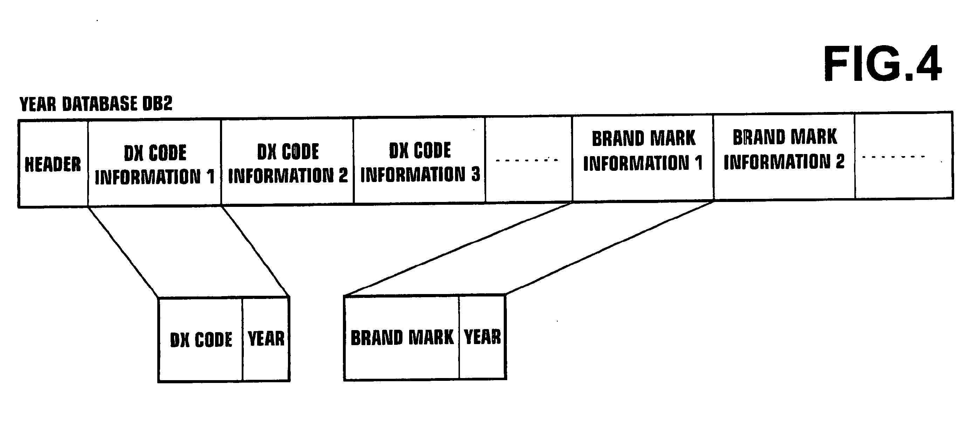

Figure 4 shows a structure of the year database DB2. As shown in Figure 4, the year database DB2 comprises a plurality of items of DX code information and brand mark information, and header information for managing the DX code information and the brand mark information. Each of the items of the DX code information comprises the DX code and the information of the year in which the negative film NF having the DX code was produced. Each of the items of the brand mark information comprises the brand mark and the information on the year in which the brand mark was used.

The information acquisition unit 44 reads the DX code recorded on each of the negative films NF and can obtain the photography date information D representing the year in which the corresponding negative film NF was produced, with reference to the year database DB2. The information acquisition unit 44 also reads the brand mark printed on the rear side of each of the prints P and can obtain the photography date information D representing the year in which the brand mark was used, with reference to the year database DB2.

The classification unit 47 assigns which of the devices in the image acquisition unit 12 obtains the image data sets S0 for each of the recording media 10 according to an instruction input by an operator. Therefore, the classification unit 47 comprises a display unit 47A for carrying out various kinds of display and an input unit 47B including a bar code reader.

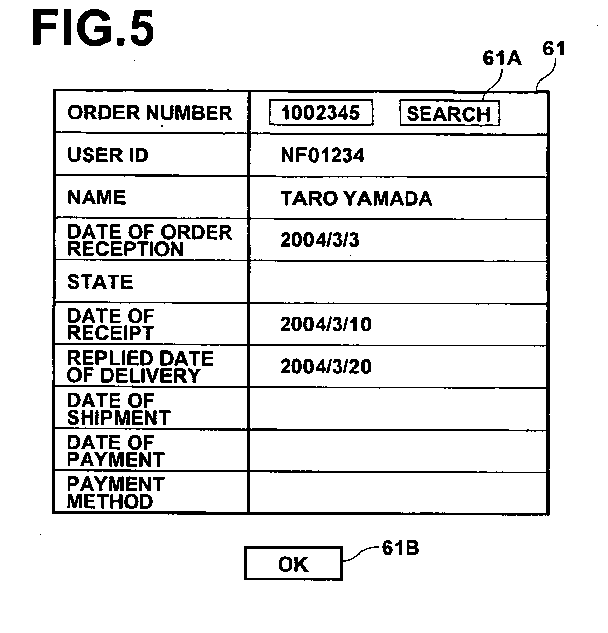

The operator carries out a receipt operation by using the classification unit 47. Figure 5 shows a receipt screen displayed on the display unit 47A of the classification unit 47. As shown in Figure 5, in a receipt screen 61 are displayed items comprising the order number, the user ID, the user name, the date of order reception, a current state, date of receipt, replied delivery date representing the date of delivery replied to the user, date of shipment, date of payment, and a method of payment. The operator reads the bar code of the order form pasted on the delivery box B, by using the bar code reader. In this manner, the order number that has been read is displayed in the item of the order number. When the operator clicks a Search button 61A, the user ID, the user name, the date when the user 2 placed the order from the PM server 3, and the date of delivery replied to the user 2 are displayed in the corresponding items in the screen. The date of the receipt operation is displayed in the item of the date of receipt. The operator confirms the content and clicks an OK button 61B if the content is correct. In response to the clicking, the classification unit 47 sends the information displayed in the receipt screen 61 to the operations management unit 48.

Thereafter, the operator carries out a classification operation. The classification operation may be carried out after the receipt operation has been completed for all the delivery boxes B received by that time. The operator opens the delivery box B and confirms the number of the negative films NF, the number of the prints P, and the number of the recording media M described in the order form and actually found in the delivery box B. At this time, an image data set representing the recording media 10 contained in the delivery box B may be obtained by photographing the recording media 10. In this case, the image data set is stored in the storage unit 46 in relation to the order number.

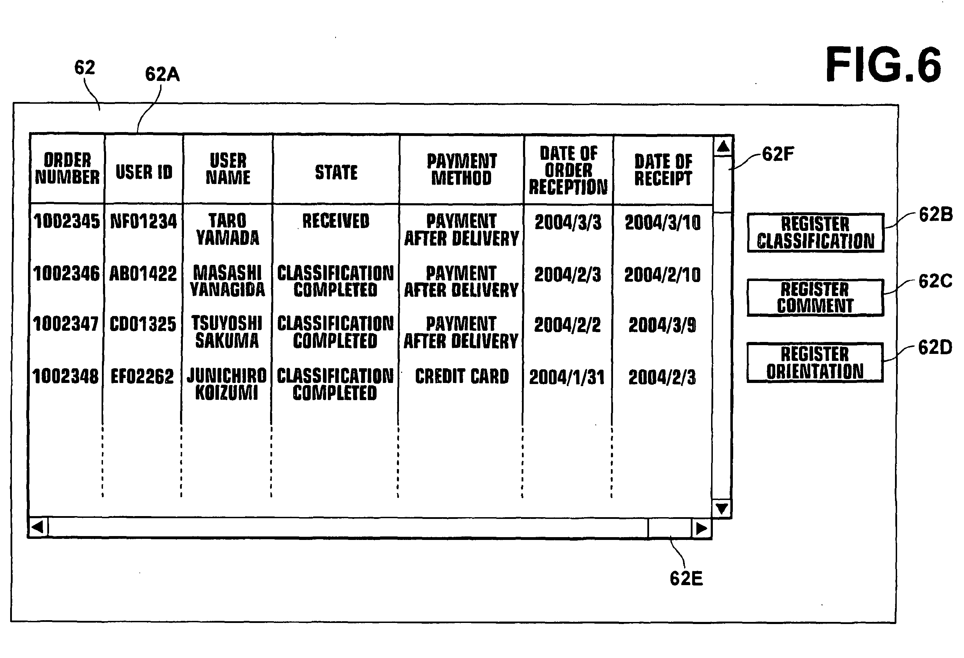

The classification unit 47 displays a main screen on the display unit 47A in response to an instruction input by the operator. Figure 6 shows the main screen. As shown in Figure 6, in a main screen 62 are displayed an information display box 62A for displaying information on the photo mining service for each of the users, a Register Classification button 62B for classification registration, an Input Comment button 62C for inputting the comment, and a Register Orientation button 62D for registering image orientation.

In the information display box 62A are displayed a list comprising items of the order number, the user ID, the user name, a state, the method of payment, the date of order reception, the date of receipt, the expected date of delivery, and the date of shipment. The state refers to how the order is being dealt with.

In Figure 6, the date of delivery and the date of shipment are not shown. However, by operating a horizontal scroll bar 62E, these items can be displayed. By operating a vertical scroll bar 62F, the list can be scrolled.

The operator of the classification unit 47 selects the order regarding which the classification operation is going to be carried out from the list. The operator then carries out the classification operation by clicking the Register Classification button 62E for display of a classification screen on the display unit 47A.

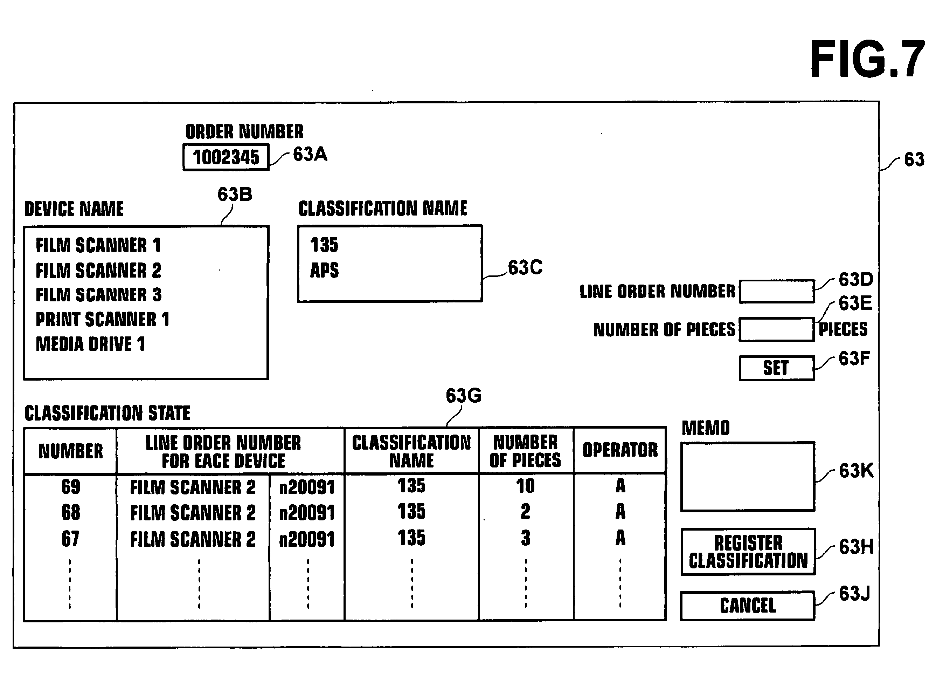

Figure 7 shows the classification screen. As shown in Figure 7, in a classification screen 63 are displayed an order number display box 63A for displaying the order number for the selected order, a name box 63B for displaying the names of the devices of the image acquisition unit in the digitalization center 4 (that is, Film Scanners 1 to 3 corresponding to the film scanners 41A~41C, Print Scanner 1 corresponding to the print scanner 42, and Media Drive 1 corresponding to the media drive 43), a classification name box 63C for displaying a classification name representing the type of the films specified at the time of reading the images from the negative films NF, a line order number box 63D for displaying a line order number (that is, a number corresponding to the type of the film scanners 41A~41C, the print scanner 42, and the media drive 43 specified in the name box 63B), a piece quantity box 63E for inputting the number of pieces, a Set button 63F for setting the classification, a classification state box 63G for showing a state of classification regarding the type selected in the name box 63B, a Register Classification button 63H for confirming the classification, a Cancel button 63J for canceling classification registration, and a memorandum input box 63K for inputting a memorandum.

The operator selects the type of the device in the image acquisition unit 12 from the names displayed in the name display box 63B, for each of the recording media 10 sent from the user 2. After the selection, the line order number of the selected device type is displayed in the line order number box 63D, and the state of classification carried out by the selected device is displayed in the classification state box 63G.

The classification state shows the quantity of the recording media 10 being classified by the device of the image acquisition unit 12 specified by the operator, and comprises information including items of the device name, the line order number, the classification name, the quantity of pieces, and the operator using the image acquisition unit 12.

The operator selects the type of the device for obtaining the image data sets S0, for each of the recording media 10 while viewing the classification state. At this time, it is preferable for the type to be selected in consideration of capability of the operator of the image acquisition unit 12 being displayed in the classification state box 63G. For each of the negative films NF, each of the film storage sheets corresponds to one piece and the film type are selected in the classification name box 63C. The quantity of the pieces is also input in the piece quantity input box 63E. The Set button 63F is then clicked. In this manner, classification of one of the negative films NF is completed, and the classification state is updated in the classification state box 63G. In the case where the images cannot be scanned due to the negative films NF having been damaged, for example, text representing the fact is input in the memorandum input box 63K.

The operator bundles the prints P as one piece, and selects the Print Scanner 1 in the name box 63B. The operator also inputs the quantity in the classification quantity box 63E.

The operator deals with each of the recording media M as one piece, and selects the Media Drive 1 in the name box 63B. The operator also inputs the quantity in the classification quantity box 63E.

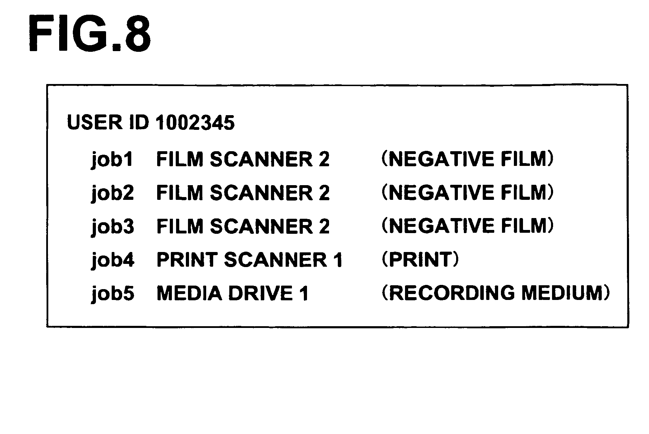

After the operator completes classification of all the recording media 10, the operator clicks the Register Classification button 63H for completing the classification operation regarding the order. In response to the clicking, the classification unit 47 generates classification information representing a result of the classification and sends the classification information to the operations management unit 48. Figure 8 shows the classification information. As shown in Figure 8, the classification information includes the user ID and a job number. The job number is given to each of the processes for obtaining the image data sets S0 from the respective recording media 10, and describes which of the devices in the image acquisition unit 12 is used for obtaining the image data sets S0 for each of the jobs.

The classification information shown in Figure 8 shows the result of classification at the time of obtaining the image data sets S0 from the negative films NF whose quantity is 3, a bundle of the prints P, and the recording media M whose quantity is 1. The classification result is printed as a classification form, and provided to the operator of the image acquisition unit 12. The operator of the image acquisition unit 12 refers to the classification result printed on the classification form, and obtains the image data sets S0 from the recording media 10 by using the image acquisition unit 12.

The operations management unit 48 manages the processing for the photo mining service carried out by the digitalization center 4. More specifically, the operations management unit 48 manages the entire processing carried out in the photo mining service, such as order reception, delivery of the delivery box B, receipt of the delivery box B, classification, acquisition of the image data sets S0, image processing, comment input, image confirmation, image conversion, DVD generation, DVD delivery, and payment, for each order number for each of the users 2. The operations management unit 48 uses the job management database DB3 therefor.

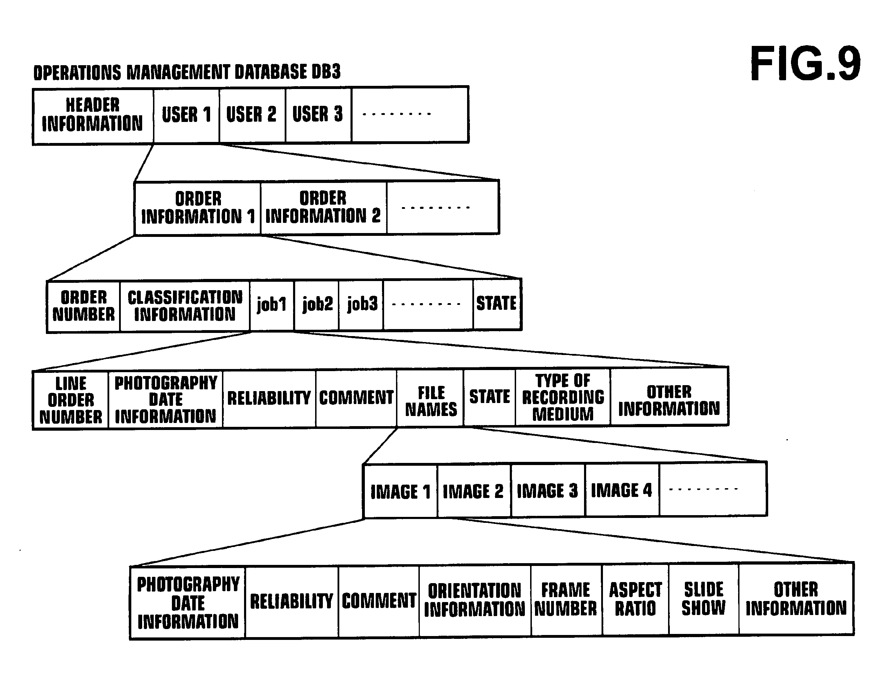

Figure 9 shows the operations management database DB3. As shown in Figure 9, the operations management database DB3 comprises order information representing the content of an order for the photo mining service for each of the users, and header information that manages the order information. The order information comprises items such as the order number, the classification information, information on all the jobs in the order, and the current state of the order. The information on the jobs comprises items such as the line order number of the image acquisition unit 12 that carries out each of the jobs, the photography date information, reliability of the photography date represented by the photography date information, a comment for each of the jobs, the file names, a current state of each of the jobs, the type of a corresponding one of the recording media 10, and other information.

Each of the items of the file names comprises items such as the photography date information of the image data sets S0 having the corresponding file name, the reliability of the photography date thereof, a comment for the image data set S0, orientation information representing orientation of the corresponding image, the frame number if the image has been read from one of the negative films, an aspect ratio of the image, a slide show representing whether the image is included in the slide show, and other information.

The order number and the classification information are the same as the order number sent from the PM server 3 and the classification information generated by the classification unit 47. The state of each order represents the current state of the order. More specifically, the state is represented by information registered by the components of the image generation apparatus 40 such as the image acquisition unit 12, the image processing unit 45, the classification unit 47, and the DVD generation unit 52. The state indicates the state of completion of delivery box shipment, waiting for receipt, receipt, being classified, completion of classification, waiting for scanning, being scanned, completion of scanning, being subjected to the image processing, completion of the image processing, being subjected to the image conversion, completion of the image conversion, waiting for DVD generation, DVD being generated, and completion of shipment, for example.

The photography date information for each of the jobs is the photography date information D obtained by the information acquisition unit 44. The comment for each of the jobs is the comment input from the comment input unit 49 as will be described later. The state of each of the jobs represents the current state thereof. More specifically, the state is represented by information registered by the components of the image generation apparatus 40 such as the image acquisition unit 12 and the image processing unit 45 regarding the processing carried out therein. For example, the state indicates the state of completion of classification, waiting for scanning, being scanned, completion of scanning, being subjected to the image processing, and completion of the image processing.

The state for each order or for each of the jobs is used for confirmation by the operator in the digitalization center 4. However, the state may be sent to the PM server 3. In this manner, the user 2 can confirm the state of his/her order by accessing the PM server 3. The state to be notified to the user 2 is not necessarily detailed as for the operator in the digitalization center 4. For example, only 3 types of the state, such as the state of being scanned, DVD being generated, and completion of DVD shipment, may be used for notification to the user 2.

For the image data sets S0 obtained by a digital camera or from the negative films NF recorded with the photography date as the magnetic information, the reliability of the photography date information D is high. However, in the case where the photography date information D has been obtained with reference to the year database DB2 based on the DX code of the films or from the brand mark of the prints P, the reliability thereof is low.

More specifically, in the case where the image data sets S0 were obtained by a digital camera or from the negative films NF recorded with the photography date as the magnetic information, the photography date information D can be obtained with accuracy regarding year, month, day, hour, minute, and even second if camera setting was correct. The photography date information D can be obtained with accuracy regarding year, month, and day from the photography date printed in the negative films NF or the prints P and from the date specified by the user 2.

However, only a rough estimate of the year can be obtained from the DX code of the films, the brand mark on the prints P, and the information on the margin of the prints. For example, depending on a manufacturer, the year can be inferred from the DX code or the brand mark in a range of 3 years each before and after the actual year of use of the corresponding code or mark.

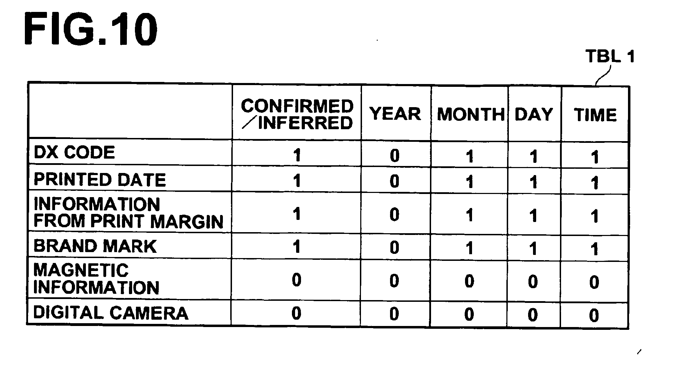

For this reason, the operations management unit 48 registers the reliability with the management database DB3, depending on the source of the photography date information D. More specifically, the reliability is defined by 5 items comprising year, month, day, time, and either confirmation or inference. The reliability is registered with reference to a table representing the source of the photography date information D and the reliability. Figure 10 shows the table representing a relationship between the source of the photography date information D and the reliability. As shown in Figure 10, a table TBL1 comprises items such as confirmed/inferred information representing whether the date of photography represented by the photography date information D was confirmed or inferred, and information representing whether the year, month, day, and time have been confirmed or unknown. In the case where the photography date has been confirmed, 0 is described for the item of confirmed/inferred information while 1 is input therein if the date has been inferred. In the case where the information on the year, month, day, and time has been confirmed or inferred (depending on the confirmed/inferred information), 0 is described therefor. In the case where the information on the year, month, day, and time has been unknown, 1 is described therein

The operations management unit 48 stores the table TBL1 and finds the reliability comprising the information of the 5 types depending on the source of the photography date information D, with reference to the table TBL1 and the information on the source of the photography date information D. The reliability found in this manner is registered with the operations management database DB3.

The reliability may be found from the photography date information D at the time of conversion of the image data sets S1 by the image conversion unit 51 as will be described later, without registration thereof with the operations management database DB3.

The operations management unit 48 manages the state of the classification for the image acquisition unit 12, and displays the state in the classification state box 63G in the classification screen 63.

The comment input unit 49 receives input of the comment for each of the jobs. The comment can be the name of an event described by the user 2 on the film storage sheets of the negative films NF or on the rear side of the prints P or on the order form, for example. The comment input unit 49 has a display unit 49A and an input unit 49B, and displays the main screen 62 shown in Figure 6 on the display unit 49A in response to an instruction from the operator. When the operator clicks the Register Comment button 62C, the comment input unit 49 displays a comment input screen on the display unit 49A.

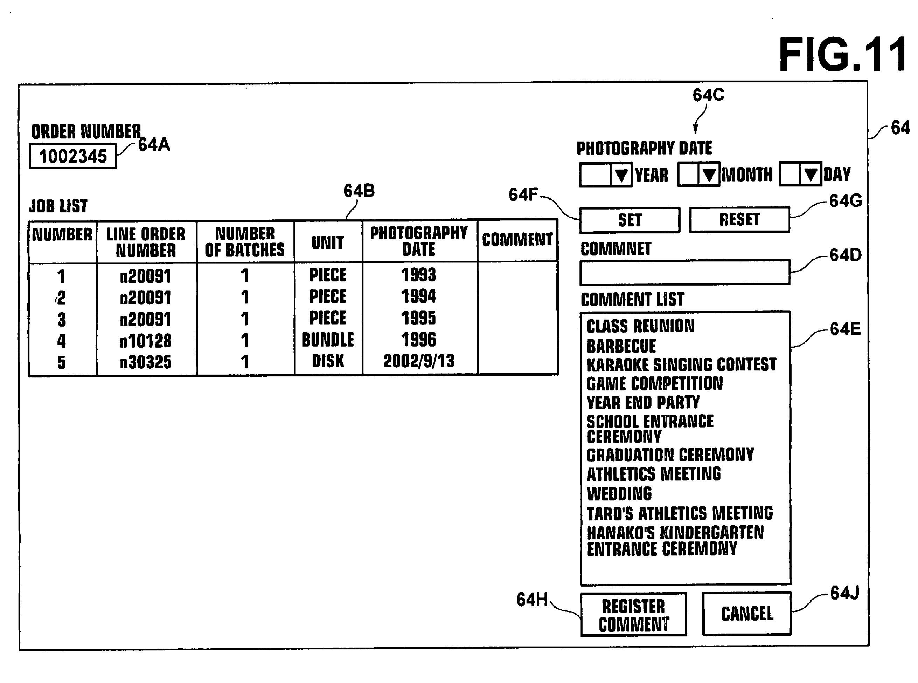

Figure 11 shows the comment input screen. As shown in Figure 11, a comment input screen 64 comprises an order number display box 64A for displaying the order number regarding which the comment is input, a job list box 64B for displaying a list of the jobs, photography date input boxes 64C for inputting the photography date, a comment input box 64D for inputting the comment, a comment list box 64E for displaying a list of comments, a Set button 64F for setting the comment, a Reset button 64G for resetting the content of input, a Register Comment button 64H for confirming the comment that has been input, and a Cancel button 64J for canceling comment input.

An operator inputting the comment selects one of the jobs on which the comment is to be input from the job list box 64B, and inputs the comment in the comment input box 64D. Since the comment list box 64E has the comments used commonly, the operator can input the comment in the comment input box 64D by selecting any one of the comments from the comment list box 64E.

In the case where the same user 2 orders the photo mining service more than once, a comment specific to the user 2, such as the name of his/her child and the name of a place frequently visited by the user 2, is often input repeatedly. Therefore, the comment input unit 49 may store the comment that has been input once for the user 2 so that the stored comment can be displayed in the comment list box 64E. In this embodiment, "Taro's Athletics Meeting" and "Hanako's Kindergarten Entrance Ceremony" are displayed in the comment list box 64E as the comments input for the user in the past.

In this embodiment, the information acquisition unit 44 obtains the photography date information D. However, the date of photography is written on the rear side of the prints P or on the film storage sheets in some cases. Therefore, in this case, the operator inputs the date in the photography date input boxes 64C. In this manner, the photography date information D stored in the operations management database DB3 regarding the corresponding job or regarding the image data sets S0 obtained from the prints P is replaced by the photography date information input by the operator. The photography date input boxes 64C have pull-down menus for easier input of the photography date. Note that photography dates, which are written on the film storage sheets or on the rear sides of the prints P, may be recognized by OCR. The recognized dates may be employed as the photography date information D.

The operator inputs the comment for each of the jobs, and clicks the Set button 64F for setting the comment. By clicking the Reset button 64G, the operator can reset the content that has been input, and can carry out comment input again. When the operator clicks the Set button 64F after input of the comments (and the photography date if necessary) for all the jobs and clicks the Register Comment button 64H, the comment input unit 49 sends information relating the comments and the jobs to the operations management unit 48. The operations management unit 48 registers the comments for the jobs with the operations management database DB3, based on the information.

The comments can also be input at the time of acquisition of the image data sets S0 and at the time of image confirmation that will be described later. When the comments are input at the time of acquisition of the image data sets S0, the comment input unit 49 is installed together with the image acquisition unit 12 so that the operator carrying out acquisition of the image data sets S0 can input the comments. In the case where the comments are input at the time of image confirmation, the comment input unit 49 is installed together with the image confirmation unit 50 so that an operator carrying out image confirmation can input the comments.

The image confirmation unit 50 is used for confirmation and correction of the image data sets S1 having been subjected to the image processing, and comprises a display unit 50A and an input unit 50B. In response to an instruction from the operator, the image confirmation unit 50 displays the main screen 62 shown in Figure 6 on the display unit 50A, and displays an image confirmation screen on the display unit 50A when the operator clicks the Register Orientation button 62D.

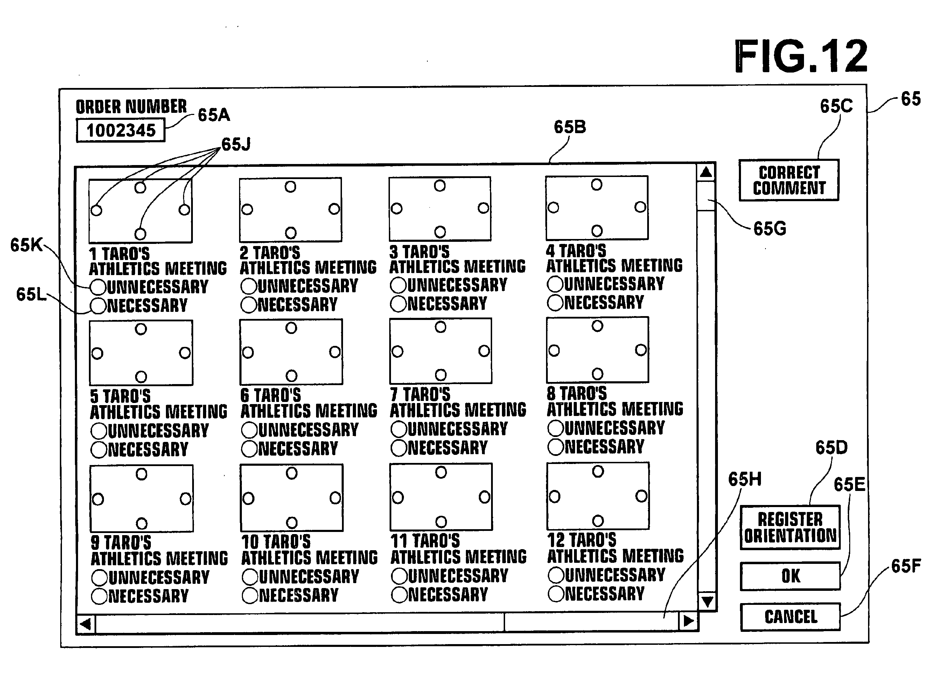

Figure 12 shows the image confirmation screen. As shown in Figure 12, an image confirmation screen 65 comprises an order number display box 65A for displaying the order number of the selected order, a catalog box 65B for displaying a catalog of thumbnail images represented by the image data sets S1 together with the comments, a Correct Comment button 65C for correcting the comments in the catalog display box 65B, a Register Orientation button 65D for registering orientation as will be described later, an OK button 65E for confirming the orientation registration, a Cancel button 65F for canceling the orientation registration, a Reliability button 65M for displaying the images according to the reliabilities thereof, a Rearranging button 65N for rearranging the images as will be described later, and a Reliability Display Box 650 for dislaying the reliability of a selected image.

Scroll bars 65G and 65H are provided in the catalog display box 65B, whereby the thumbnail images and the comments that cannot be displayed fully in the catalog display box 65B can be displayed. Each of the thumbnail images displayed in the catalog display box 65B has 4 radio buttons 65J on top and bottom and right and left thereof. Each of the comments is displayed under the corresponding thumbnail image, and each of the thumbnail images has an Unnecessary button 65K for excluding the image from the slide show and a Necessary button 65L for including the image in the slide show.

When the operator of the image confirmation unit 50 selects any one of the thumbnail images in the catalog display box 65B and clicks the Correct Comment button 65C, the image confirmation unit 50 displays a comment input screen specific to the image on the display unit 50A. Like the comment input screen shown in Figure 11, the comment input screen for each of the images has the photography date input boxes 64C for inputting the photography date, the comment input box 64D for inputting the comment, the comment list box 64E for displaying the list of the predetermined comments, the Set button 64F for setting the comment, the Reset button 64G for resetting the content of input, the Register Comment button 64H for confirming the comment that has been input, and the Cancel button 64J for canceling comment input. In this manner, the operator can correct the comment and/or the date of photography for each of the images.

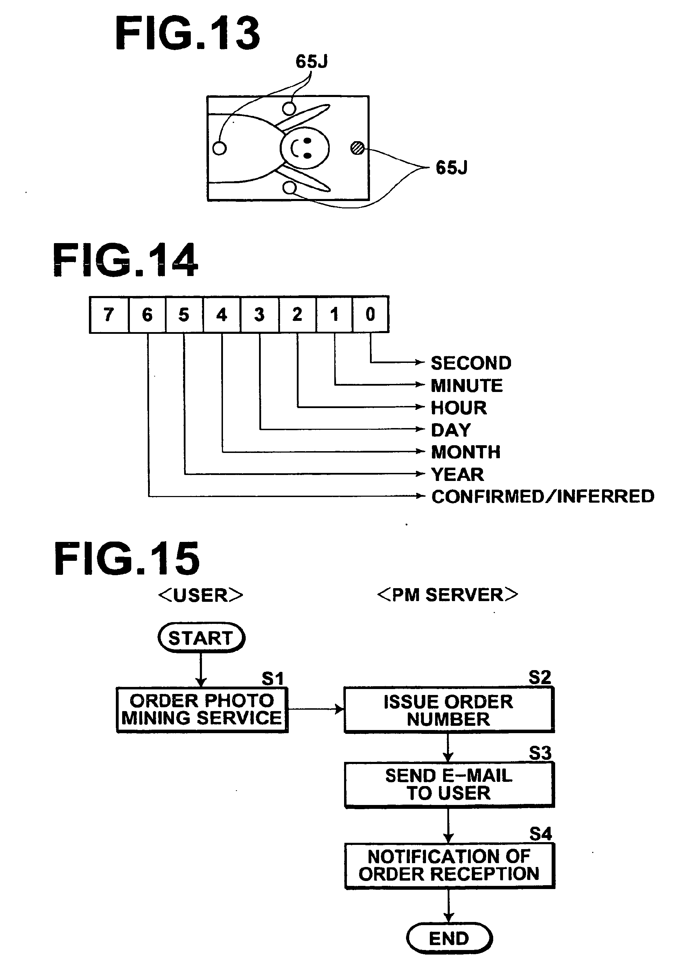

In the catalog display box 65B, an image obtained by tilting a camera by 90 degrees is displayed in landscape orientation as shown in Figure 13. Therefore, the operator selects one of the thumbnail images whose orientation needs to be changed, and selects the radio button 65J on one of the sides of the image to be used as the upper side. When the operator clicks the Register Orientation button 65D thereafter, the image confirmation unit 50 generates orientation information on the image data set S1 corresponding to the thumbnail image selected by the operator. For example, for the thumbnail image shown in Figure 13, the image can be viewed properly if the right side thereof becomes the upper side. Therefore, the operator clicks the radio button 65J corresponding to the right side. In this manner, the image confirmation unit 50 generates the orientation information for causing the right side to become the upper side.

For some of the thumbnail images displayed in the catalog display box 65B, if the images are not included in the slide show due to blur or the like, the operator clicks the Unnecessary button 65K thereof. For other images to be included in the slide show, the operator clicks the Necessary button 65L. Information of which of the buttons 65K or 65L has been clicked for each of the images is sent to the storage unit 46 as selection information and stored in the operations management database DB3. The selection information is referred to at the time of generation of the slide show to be recorded in the DVD-R as will be described later. For the images which may or may not be included in the slide show, neither the button 65K nor the button 65L is selected.

After clicking the radio button 65J for the thumbnail image whose orientation needs to be changed among the thumbnail images in the catalog display box 65B and clicking either one of the buttons 65K or 65L, the operator clicks the OK button 65F. In this manner, the orientation has been registered. The image confirmation unit 50 sends the orientation information, the newly input comment, and the information of which of the buttons 65K or 65L has been selected to the operations management unit 48.

If the operator selects a desired thumbnail image from among those which are displayed in the catalog display box 65B, then clicks the reliability button 65M, the reliability of the selected image is displayed in the reliability display box 650, along with the source of the photography date information D. Note that the reliability which is displayed here may be that described in table TBL1 of Figure 10. Alternatively, the reliability ranking of the selected image may be displayed, as will be described later.

If the operator clicks the reliability button 65M, then clicks the Rearranging button 65N, the thumbnail images, which are displayed within the catalog display box 65B, are rearranged in order of decreasing reliability, from highest to lowest. By clicking the Rearranging button 65N again, the thumbnail images within the catalog display box 65B are rearranged in order of increasing reliability, from lowest to highest. Note that the order of reliability is the order of the amount of confirmed information within the table TBL1. However, in the case that the reliabilities are ranked, as will be described later, the order may be the reliability ranking.

The operations management unit 48 registers with the operations management database DB 3 the orientation information, the newly input comment, and the information on which of the buttons 65K or 65L has been selected.

The image conversion unit 51 converts the image data sets S1 having been subjected to the image confirmation into the image data sets S2 in Exif format by adding the information registered with the operations management database DB3 for each of the images as a tag to the corresponding image data sets S1. At this time, the image conversion unit 51 carries out the conversion into the image data sets S2 by rotating the image data sets S1 whose orientation needs to be changed according to the orientation information registered with the operations management database DB3.

The tag describes the information on the photography date. At the same time, the tag also describes the reliability of the photography date. Figure 14 shows how the reliability is described. As shown in Figure 14, the reliability comprises 8-bit information ranging from bit 0 to bit 7. The bit 7 is a spare bit. The bit 6 is 0 in the case where the photography date has been confirmed, and 1 if the date has been inferred. The bit 5 to bit 0 respectively correspond to the year, month, day, hour, minute, and second, and have 0 in the case where the year, month, day, hour, minute, and second have been confirmed or inferred. The bit 5 to bit 0 represent the fact that the year, month, day, hour, minute, and second have been confirmed or inferred in the case where the bit 6 is 0 or 1, respectively. In the case where the year, month, day, hour, minute, and second are not known, the bit 5 to bit 0 are filled with 1.

The reliability registered with the operations management database DB3 describes the time (hour, minute, and second) as one of the items therein. Therefore, the bit 3 to bit 0 corresponding to hour, minute, and second of the reliability in the tag have the same value.

The DVD generation unit 52 records all the image data sets S2 generated by the image conversion unit 51 in the DVD-R, and calculates a free space in the DVD-R for the case where all the image data sets S2 are recorded in the DVD-R. The DVD generation unit 52 generates the DVD-Video file V0 having the size corresponding to the free space, and records the DVD-Video file V0 in the DVD-R. Hereinafter, generation of the DVD-R will be described.

The DVD generation unit 52 firstly generates a list of year information on all the image data sets S2, based on the information of the photography date described in the tag of each of the image data sets S2. At this time, the image data sets S2 regarding which the button 65K has been selected by the image confirmation unit 50 are excluded from the list.

The DVD generation unit 52 calculates the free space by subtracting the total size of all the image data sets S2 from the capacity of the DVD-R. At this time, it is preferable for the free space to have a margin of some size. The DVD generation unit 52 then calculates the number of the image data sets S2 corresponding to the size that has been calculated, and selects the calculated number of the image data sets S2. The image data sets S2 regarding which the Necessary button 65L has been clicked in the image confirmation screen 65 are necessarily selected. The DVD generation unit 52 then generates a file of MPEG format enabling serial image reproduction from the selected image data sets S2, and carries out authoring by including a title menu and background music. In this manner, the DVD generation unit 52 generates the DVD-Video file V0.

The image data sets S2 to be included in the DVD-Video file V0 are selected with reference to the list described above. For example, all the image data sets S2 are classified according to year based on the photography date described in the tag, and almost the same number of the image data sets S2 are selected for each year.

A procedure carried out in this embodiment will be described next. Figure 15 is a flow chart showing a procedure carried out in this embodiment when the user 2 places the order for the photo mining service. The user 2 accesses the Web site of the PM server 3 by using the user terminal 20, and inputs the user ID and the password. In this manner, the PM server 3 authenticates the user 2, and the procedure starts. The user 2 places the order for the photo mining service in the Web site (Step S1). The PM server 3 receives the order and issues the order number (Step S2). The PM server 3 then sends the user 2 the e-mail message notifying the order number and the date of delivery (Step S3). The PM server 3 notifies the digitalization center 4 of the reception of the order (Step S4) to end the procedure.

The operator in the digitalization center 4 issues the order form when the operations management unit 48 receives notification of order reception from the PM server 3, and sends the order form to the user 2 together with the delivery box B.

When the user 2 receives the delivery box B, the user 2 encloses in the delivery box B the recording media 10 regarding which the photo mining service is requested, and sends the delivery box B to the digitalization center 4.

The digitalization center 4 receives the delivery box B, and carries out the processing for the photo mining service with use of the image generation apparatus 40.

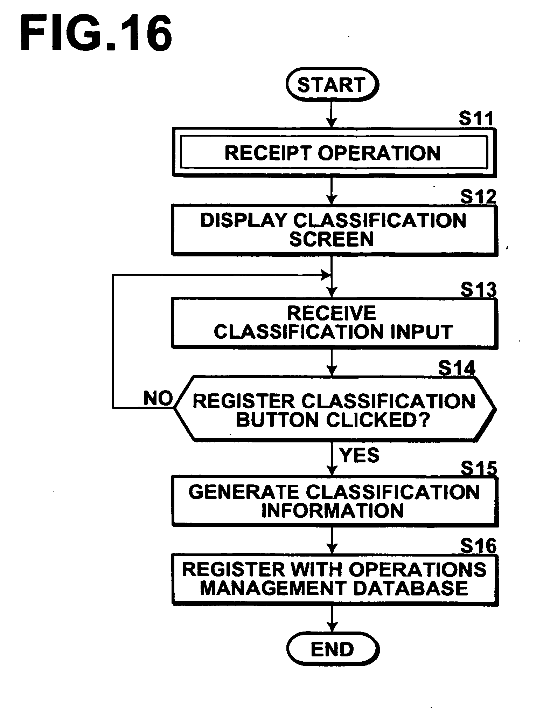

Figure 16 is a flow chart showing a procedure carried out by the digitalization center 4 at the time of classification. The step carried out by the operator is shown by double lines. The operator carries out the receipt operation (Step S11), and opens the delivery box B for confirming the content thereof in order to carry out the classification operation. At this time, the classification screen 63 is displayed on the display unit 47A of the classification unit 47 (Step S12), and input of classification is received from the operator (Step S13). Whether or not the Register Classification button 63H has been clicked is then judged (Step S14). If a result at Step S14 is affirmative, the classification information representing the classification result is generated (Step S15) . The operations management unit 48 registers the classification information with the operations management database DB3 (Step S16) to end the classification operation.

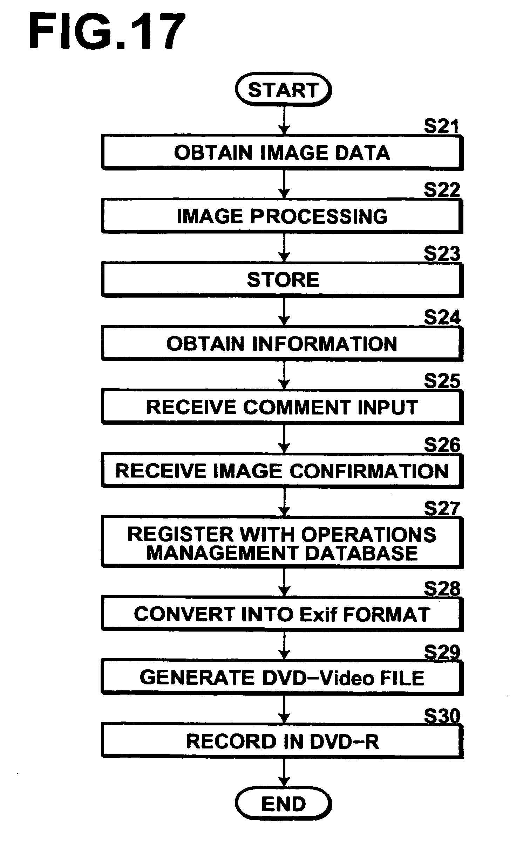

Figure 17 is a flow chart showing a procedure carried out in the digitalization center 4 after the classification operation. After completion of the classification operation, the image acquisition unit 12 obtains the image data sets S0 (Step S21). The image processing unit 45 carries out the image processing on the image data sets S0, and obtains the processed image data sets S1 (Step S22). The storage unit 46 stores the image data sets S1 (Step S23). The information acquisition unit 44 obtains the information J including the photography date information D (Step S24). The operation management unit 48 determines the reliability from the photography date information D, then registers the reliability in the operations management database DB3 (step S25). The comment input unit 49 receives input of the comments by the operator (Step S26) .

The image confirmation unit 50 receives input of image confirmation, regarding registration of orientation, correction of the comments, and inclusion in or exclusion from the slide show (Step S27). The operations management unit 48 registers the information represented by the information J, the comments, the orientation information and the like with the operations management database DB3 (Step S28).

The image conversion unit 51 converts the image data sets S1 into the image data sets S2 of Exif format by adding the information registered with the operations management database DB3 as the tags to the image data sets S1 (Step S29). The DVD generation unit 52 generates the DVD-Video file V0 in the form of slide show from the image data sets S2 (Step S30), and records the DVD-Video file V0 and the image data sets S2 in the DVD-R (Step S30) to end the procedure.

The DVD-R generated in this manner is sent to the user 2 who placed the order.

The user 2 can enjoy the slide show by reproducing the DVD-Video file V0 in the DVD-R. Furthermore, the user 2 can display a catalog of the image data sets S2 and can process the image data sets S2.

At this time, based on the reliability of the photography date described in the tag of each of the image data sets S2, the image data sets S2 can be sorted in order of the reliability (such as in order of more information representing confirmation in the bit 6 to bit 0), and can display the catalog of the image data sets S2 in different color frames depending on the reliability. In addition, the user 2 can correct the reliability by himself/herself. In this case, based on the reliability added to the image data sets S2, a level of year, month, day, and time may be changed so that a burden on the user 2 can be eased at the time of changing the photography date. Note that the image data sets S2 having low reliability may be excluded the DVD-Video file V0, which is in slide show format, or not recorded in the DVD-R.

As has been described above, in this embodiment, the date of photography represented by the photography date information D and the reliability thereof are added to each of the image data sets S2. Therefore, with reference to the image data sets S2, the date of photography represented by the photography date information D and the reliability thereof can be known. In this manner, the images can be classified according to the reliability, for example.

In the embodiment described above, the year of photography may be inferred based on an automobile, fashion or hair style, and how buildings are damaged in the images represented by the image data sets. The inferred year can be used as the photography date information D. In addition, the amount of exposed skin differs between summertime and wintertime. Therefore, the season in which an image has been obtained may be estimated from the percentage of skin colored regions included in the image, and the season assigned as the photography date information D. Note that in cases such as this, in which the photography date information D is obtained from an image, the reliability is low.

In the above-described embodiment, the operator carries out the classification operation by using the classification unit 47 while viewing the state of classification for the image acquisition unit 12. However, the classification unit 47 may carry out the classification operation automatically depending on the state of classification for the image acquisition unit 12.

In the embodiment described above, the image acquisition unit 12 comprises the film scanners 41A~41C, the print scanner 42, and the media drive 43. However, an album scanner for reading images from a photo album and a scanner for reading a certificate of merit or a ticket stub which the user 2 wishes to record in the DVD-R may also be used as the image acquisition unit 12.

Rankings may be assigned to the reliabilities in the embodiment described above. For example, higher rankings may be assigned to images having greater numbers of confirmed data in bit 6 to bit 0 illustrated in Figure 14. In this case, the rankings will be assigned in 7 ranks, but it is possible to adjust the number of ranks to any desired number, such as 3.

As an alternative method for assigning rankings, rankings may be assigned according to the source of the photography date information D. For example, photography dates that are written on film storage sheets and on the rear sides of prints P are intended by the user, therefore the reliabilities thereof are assigned the highest ranks. The reliability of photography date information D, which have been obtained from dates of negatives or prints, or which have been obtained from tag information of images obtained by digital cameras, are assigned the second highest ranks. The reliability of photography date information D, which have been obtained from DX codes of film, brand markings on prints P, or from information within the margins of prints, are assigned the third highest ranks. The reliability of photography date information D, which have been recognized from images, are assigned the lowest ranks.

Note that there are cases in which the photography dates, which are written on film storage sheets or the rear side of prints P, differ from those which are obtained form dates of negatives or prints, or obtained from tag information attached to images obtained by digital cameras. In these cases, the photography date information D becomes unclear, therefore it is preferable that the reliability ranking of these images is lowered.

There are also cases in which the area of skin colored regions within an image is comparatively large, even though the photography date indicated by the photography date information D is during the wintertime. In these cases, there is a high probability that the image was photographed during the summertime. If recognition of skin colored regions was performed after assigning a reliability to the image, the reliability may be lowered. Note that in the case that GPS information is attached to the image, the GPS information may be referenced. In cases that the GPS information reveals that image was obtained in a warm climate during the wintertime, it is preferable that the ranking of the reliability is not lowered.

In cases in which a photography date is recognized from an image, then image processing is administered on the image, there is a possibility that the photography date which is recognized from the image will change, due to changes in image quality. For this reason, it is preferable that the reliability ranking is lowered in the case that image processing is administered on images. In addition, there are digital cameras that write erroneous photography dates into tag information, depending on the model thereof. Accordingly, the model of the digital camera that obtained an image is determined from the tag information attached to the image. In the case that the digital camera is a model that writes erroneous photography dates into tag information, it is preferable that the reliability ranking is lowered.

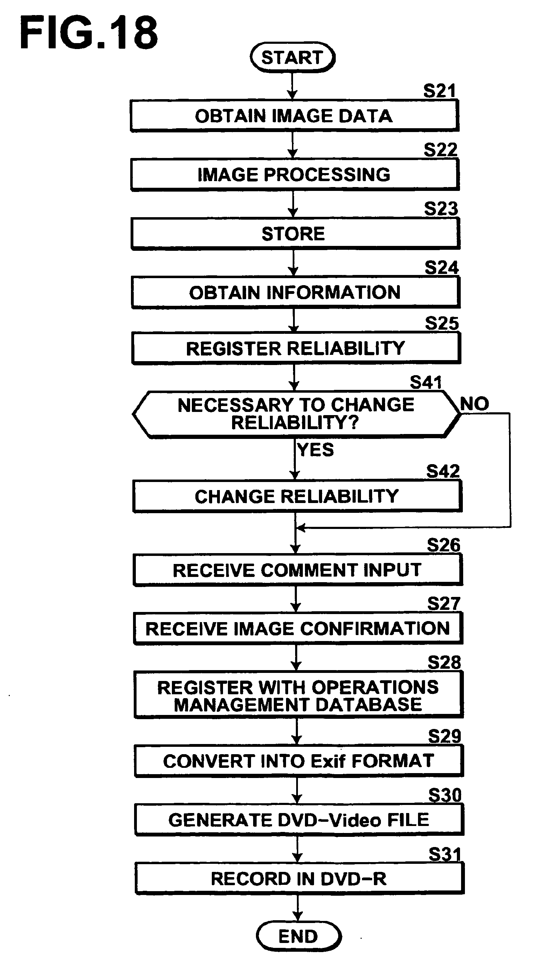

Figure 18 is a flow chart that illustrates the processes which are performed in this case. Note that in the flow chart of Figure 18, the same processes as those indicated in the flow chart of Figure 17 are denoted with the same step numbers, and detailed descriptions thereof will be omitted. The processes illustrated in Figure 18 follow step S25 of the flow chart of Figure 17. Step S41 judges whether it is necessary to change the reliability, and step S42 reregisters a changed reliability in the operation management database DB3 in the case that it is necessary to change the reliability. Thereafter, the same processes as those performed after step S25 in the flow chart of Figure 17 are performed.

## Claims

1. An image generation apparatus comprising:
image acquisition means for obtaining at least one image from a recording medium;
photography date information acquisition means for obtaining photography date information representing date of photography regarding the image or images; and
information addition means for adding the date of photography represented by the photography date information and reliability of the date of photography to the image or images.

2. An image generation apparatus as defined in Claim 1, wherein:
the information addition means assigns ranks to the reliability of the date of photography of the image or images.

3. An image generation method comprising the steps of:
obtaining at least one image from a recording medium;
obtaining photography date information representing date of photography regarding the image or images; and
adding the date of photography represented by the photography date information and reliability of the date of photography to the image or images.

4. A program for causing a computer to execute an image generation method comprising the steps of:
obtaining at least one image from a recording medium;
obtaining photography date information representing date of photography regarding the image or images; and
adding the date of photography represented by the photography date information and reliability of the date of photography to the image or images.

5. A computer readable medium, having the program as defined in Claim 4 recorded thereon.

## Patentansprüche

1. Bilderzeugungsvorrichtung, umfassend:
eine Bildbeschaffungseinrichtung zum Erhalten zumindest eines Bildes von einem Aufnahmemedium;
eine Fotografiedatum-Informations-Beschaffungseinrichtung zum Erhalten von Fotografiedatum-Information, welche ein Fotografiedatum bezüglich des Bildes oder der Bilder repräsentiert; und
eine Informationshinzufügungseinrichtung zum Hinzufügen des durch die Fotografiedatum-Information repräsentierten Fotografiedatums und einer Zuverlässigkeit des Fotografiedatums zu dem Bild oder den Bildern.

2. Bilderzeugungsvorrichtung nach Anspruch 1, wobei:
die Informationshinzufügungseinrichtung der Zuverlässigkeit des Fotografiedatums des Bildes oder der Bilder Ränge zuweist.

3. Bilderzeugungsverfahren, umfassend die Schritte:
Erhalten zumindest eines Bildes von einem Aufnahmemedium;
Erhalten von Fotografiedatum-Information, welche ein Fotografiedatum bezüglich des Bildes oder der Bilder repräsentiert; und
Hinzufügen des durch die Fotografiedatum-Information repräsentierten Fotografiedatums und einer Zuverlässigkeit des Fotografiedatums zu dem Bild oder den Bildern.

4. Programm zum Veranlassen eines Computers, ein Bilderzeugungsverfahren auszuführen, welches die Schritte umfasst:
Erhalten zumindest eines Bildes von einem Aufnahmemedium;
Erhalten von Fotografiedatum-Information, welche ein Fotografiedatum bezüglich des Bildes oder der Bilder repräsentiert; und
Hinzufügen des durch die Fotografiedatum-Information repräsentierten Fotografiedatums und einer Zuverlässigkeit des Fotografiedatums zu dem Bild oder den Bildern.

5. Computerlesbares Medium, welches das Programm nach Anspruch 4 darauf gespeichert hat.

## Revendications

1. Dispositif de génération d'images comprenant :
un moyen d'acquisition d'images destiné à obtenir au moins une image à partir d'un support d'enregistrement ;
un moyen d'acquisition d'informations de date de la prise de vue destiné à obtenir des informations de date de la prise de vue représentant la date de l'image ou des images ; et
un moyen d'ajout d'informations destiné à ajouter la date de la prise de vue représentée par les informations de date de prise de vue et la fiabilité de la date de la prise de vue à l'image ou aux images.

2. Dispositif de génération d'images selon la revendication 1, dans lequel :
le moyen d'ajout d'informations attribue des rangs à la fiabilité de la date de la prise de vue de l'image ou des images.

3. Procédé de génération d'images comprenant les étapes consistant à :
obtenir au moins une image à partir d'un support d'enregistrement ;
obtenir des informations de date de prise de vue représentant la date de prise de vue de l'image ou des images ; et
ajouter la date de la prise de vue représentée par les informations de date de prise de vue et la fiabilité de la date de prise de vue à l'image ou aux images.

4. Programme permettant à un ordinateur d'exécuter un procédé de génération d'images comprenant les étapes consistant à .
obtenir au moins une image à partir d'un support d'enregistrement ;
obtenir des informations de date de prise de vue représentant la date de prise de vue de l'image ou des images ; et
ajouter la date de la prise de vue représentée par les informations de date de prise de vue et la fiabilité de la date de prise de vue à l'image ou aux images.

5. Support lisible par un ordinateur, ayant le programme selon la revendication 4 enregistré dessus.
